# FASCICULE DE BREVET EUROPEEN

(11) **EP 3 666 745 B1**
(45) Date de publication et mention de la délivrance du brevet: **18.06.2025**
(21) Numéro de dépôt: 18212595.5
(22) Date de dépôt: 14.12.2018
(51) Int. Cl.: C04B 37/02, C04B 35/486, B23K 1/00, B23K 1/19, B23K 1/20, G04D 3/00, G04B 19/28, G04B 37/22, G04B 39/02

(54) **PROCEDE DE BRASAGE DE COMPOSANTS EN ALLIAGE DE TITANE AVEC DES COMPOSANTS EN CERAMIQUE A BASE DE ZIRCONE POUR L'HORLOGERIE OU LA JOAILLERIE**
VERFAHREN ZUM VERLÖTEN VON KOMPONENTEN AUS TITANLEGIERUNG MIT KOMPONENTEN AUS KERAMIK AUF ZIRKONBASIS FÜR UHREN UND SCHMUCK
METHOD FOR BRAZING TITANIUM ALLOY COMPONENTS WITH CERAMIC COMPONENTS MADE OF ZIRCONIA FOR TIMEPIECES OR JEWELLERY

(43) Date de publication de la demande: 17.06.2020
(73) Titulaire: Comadur SA, 2400 Le Locle (CH)
(72) Inventeur: LE BOUDOUIL, Damien, 25800 Valdahon (FR); NETUSCHILL, Alexandre, 2517 Diesse (CH)
(74) Mandataire: ICB SA

(56) Documents cités:
- EP-A1- 2 789 597
- EP-A1- 2 799 411
- EP-A1- 3 243 593
- WO-A1-2017/129705
- WO-A1-99/58332
- FR-A1- 2 862 246
- JP-A- S63 249 085
- SÓNIA SIMÕES: "Recent Progress in the Joining of Titanium Alloys to Ceramics", METALS, vol. 8, no. 11, 26 October 2018 (2018-10-26), pages 876, XP055586539, DOI: 10.3390/met8110876

## Description

### Domaine de l'invention

L'invention concerne un procédé de brasage d'un premier composant en céramique, et d'un deuxième composant en alliage métallique, pour réaliser un élément de structure et/ou d'habillage d'horlogerie.

L'invention concerne encore une montre comportant au moins un élément de structure et/ou d'habillage réalisé par le procédé selon l'invention.

L'invention concerne la fabrication de structures ou d'éléments d'habillage d'horlogerie, en particulier pour des montres. Elle concerne plus particulièrement le domaine des éléments composites résultant de l'assemblage de plusieurs matériaux, et plus particulièrement encore comportant des constituants en matériau céramique.

### Arrière-plan de l'invention

En horlogerie, l'assemblage de constituants en céramique avec d'autres constituants de type métallique reste une opération difficile à bien maîtriser pour garantir une parfaite tenue dans le temps. En effet, il s'agit généralement d'assembler des composants tri-dimensionnels, épais de quelques dizaines de millimètres à quelques millimètres, avec des surfaces de liaison qui sont principalement des surfaces gauches, avec souvent des positionnements et des centrages précis, en particulier en termes de symétrie comme une symétrie axiale sur une boîte de montre, ou une symétrie latérale sur des éléments de bracelet.

Les techniques actuelles pour l'assemblage de céramique, notamment à base zircone, et d'alliages métalliques, pour de telles applications horlogères, sont le chassage, le collage (colle polymère), ou encore le vissage. Ces technologies peuvent fragiliser les composants, ou ne peuvent pas garantir la tenue dans le temps.

Différents documents traitent cette problématique :
- JP S63 249085A SEIKO EPSON KYOCERA décrit un procédé de brasure d'un composant en céramique à base de zircone avec un autre composant en alliage métallique, notamment en alliage de titane, pour une application horlogère ;
- WO99/58332A1 PACIFIC COAST TECHNOLOGIES décrit des procédés pour sceller une surface d'interface en matériaux céramiques, telle que la zircone, sur une interface en matériaux métalliques, tels que des matériaux contenant du titane, à l'aide de brasures en titane-nickel. Les céramiques préférées comprennent les matériaux à base de zircone stabilisée; les métaux préférés comprennent les alliages de titane et de niobium; et un matériau de brasure au titane-nickel préféré est un alliage titane-nickel à 50-50. Des matériaux de brasage comprenant du titane, du nickel et du niobium sont utilisés pour joindre des matériaux céramiques à des matériaux métalliques dépourvus de niobium. Au moins une des interfaces est mise en contact par la brasure en titane-nickel et l'étanchéité est réalisée dans des conditions de vide à des températures comprises entre 900 et 1200 ° C pendant l'application de pression au joint. Les procédés conviennent aux applications de scellement hermétique dans des dispositifs médicaux implantables, des connecteurs électriques, des boîtiers électroniques, des articles de sport, des composants structurels ;
- WO2017/129705A1 MORGAN ADVANCED CERAM. INC. décrit un procédé de brasage d'un corps en céramique en zircone frittée comprenant les étapes consistant à fournir un corps en céramique en zircone frittée, à effectuer une réduction chimique du corps en céramique de zircone frittée en tout ou en partie pour former une surface réduite par rapport au corps en céramique de zircone frittée, à appliquer un matériau de brasage sur au moins une partie de la surface réduite pour former un ensemble comprenant ledit matériau de brasage et le corps en céramique frittée de zircone, à chauffer ledit assemblage à une température suffisante pour fondre au moins partiellement le matériau de brasage de telle sorte que le matériau de brasage mouille la surface réduite, et à refroidir l'assemblage pour solidifier le matériau de brasage ;
- EP3243593A1 PNL HOLDING décrit un procédé de brasage d'un élément métallique sur une surface d'une pièce en zircone, comprenant les étapes de : - altérer l'état de surface de la pièce pour permettre une accroche d'une première couche de métallisation, - nettoyer la pièce pour éliminer de sa surface les impuretés, - déposer sur la surface de la pièce une première couche de métallisation comprenant majoritairement du titane, - déposer sur la première couche de métallisation une deuxième couche de métallisation comprenant majoritairement du niobium, - appliquer l'élément contre la deuxième couche de métallisation, - déposer une brasure d'or sur l'élément et la deuxième couche de métallisation, - effectuer un refroidissement de la zone brasée de manière pilotée thermiquement, - un traitement thermique de libération de contrainte étant réalisé sous charge sur l'élément métallique avant le brasage ;
- FR2862246A1 EADS SPACE TRANSP GmbH décrit un procédé qui consiste à structurer, avant le brasage, au moins l'une des surfaces céramiques en créant une série de trous dans sa surface, à l'aide d'un faisceau laser Nd / Yag ou de moyens mécaniques. Les trous ont un diamètre moyen supérieur à 550 mcm et appartiennent à deux classes qui diffèrent par leur forme géométrique, leur diamètre ou leur profondeur. Un certain nombre de trous de chaque classe constituent un groupe géométrique et l'espacement entre les centres des trous d'un groupe est inférieur à l'espacement entre les centres des trous de l'autre. Lorsque les surfaces céramiques sont renforcées par des fibres et laminées, les trous sont percés à une profondeur au moins équivalente à celle de la couche stratifiée ;
- EP2789597 ALSTOM TECHNOLOGY Ltd. décrit un procédé permettant d'obtenir une configuration pour joindre une couche céramique comprenant un matériau isolant thermique à une couche métallique, la configuration comprenant une couche d'interface en matériau métallique, située entre la couche céramique et la couche métallique, comprenant une pluralité d'éléments emboîtables sur l'un de ses côtés, en regard de la couche de céramique, la couche de céramique comprenant une pluralité de cavités destinées à se connecter au des éléments de verrouillage correspondants de la couche d'interface, la configuration comprenant également une couche de brasage au moyen de laquelle la couche d'interface est reliée à la couche métallique ;
- EP2799411A1 COMADUR décrit un un procédé de fabrication d'un article orange à base de zircone caractérisé par le fait qu'il comprend les étapes successives consistant à réaliser un premier mélange comprenant une poudre de zircone, 3 à 20 % en poids d'au moins un stabilisant choisi parmi l'ensemble des oxydes comprenant l'oxyde d'yttrium, l'oxyde de magnésium, et l'oxyde de calcium seuls ou en combinaison, 0,1 % à 5 % en poids d'au moins un élément destiné à réaliser une phase vitreuse, et choisi parmi l'ensemble comprenant de l'oxyde de silicium, de l'oxyde d'aluminium, de l'oxyde lithium et de l'oxyde d'yttrium seuls ou en combinaison, 1 % à 6% en poids d'une poudre d'oxyde de cérium; réaliser un deuxième mélange comprenant ledit premier mélange et un liant; réaliser un mélange granulé en opérant une granulation dudit deuxième mélange; former une ébauche en conférant à ce deuxième mélange granulé la forme de l'article désiré; fritter sous air pendant au moins trente minutes à une température comprise entre 1'250 et 1'500 DEG. C, et recuire l'article désiré à une température comprise entre 700 DEG. C et 1'350 DEG. C pendant une période comprise entre 30 minutes et 20 heures dans une atmosphère réductrice et polir ladite ébauche frittée.

D'autres indications sont apportées par l'article Sonia Simoes « Recent progress in the joining of titanium alloy to ceramics », METALS, publié le 26.10.2018;

### Résumé de l'invention

L'invention vise à résoudre l'assemblage de composants d'horlogerie en alliage métallique, avec des composants en céramique, sans imposer de contraintes mécaniques, ni de colle polymère, et ainsi, donner de meilleures propriétés mécaniques à l'assemblage.

L'invention se propose, encore, de réaliser un tel assemblage par brasage direct, sans aucune métallisation en couche mince préalable des composants antagonistes, de façon à maîtriser le coût de production.

Le but de l'invention est d'assembler des composants en un tel alliage avec des composants en céramique par un procédé de brasage sous atmosphère contrôlée. Le principe est de :
- réaliser au moins un logement (contre-dépouilles) dans un substrat en céramique;
- déposer de la brasure dans ce logement, ainsi que sur toute la surface que l'on désire braser ;
- ajouter le composant en alliage métallique que l'on désire braser, et le positionner précisément ;
- chauffer l'assemblage à la température adéquate pour réaliser la fusion de la brasure et assurer l'exécution du brasage entre les deux composants.

A cet effet, l'invention concerne un procédé de brasage d'un premier composant en céramique, et d'un deuxième composant en alliage métallique, pour réaliser un élément de structure et/ou d'habillage d'horlogerie, selon la revendication 1.

Plus particulièrement l'invention concerne un procédé de brasage, au niveau d'au moins une zone de jonction, entre au moins une première surface d'appui que comporte un premier composant en céramique à base de zircone, et au moins une deuxième surface d'appui que comporte un deuxième composant en en alliage de titane, pour la réalisation d'un élément de structure et/ou d'habillage pour l'horlogerie ou la joaillerie.

L'invention concerne encore une montre comportant au moins un élément de structure et/ou d'habillage réalisé par le procédé selon l'invention.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en vue en plan, un premier composant brut, ici constitué par une carrure de montre en céramique à base de zircone;
- la figure 2 représente, de façon schématisée, et en coupe selon un plan radial, un détail de la carrure de la figure 1, au niveau d'une première surface d'appui pour la réception d'un deuxième composant, ici une bague ;
- la figure 3 représente, de façon similaire à la figure 2, un agencement de cette carrure selon l'invention, avec un premier logement dans son épaisseur, en retrait de cette première surface d'appui ;
- la figure 4 représente, de façon similaire à la figure 3, le dépôt de brasure dans ce logement ;
- la figure 5 représente, de façon similaire à la figure 2, le deuxième composant, ici constitué par une bague en alliage de titane, en particulier un alliage de titane grade 5, et comportant une deuxième surface d'appui agencée pour coopérer de façon au moins partiellement complémentaire avec la première surface d'appui de la carrure, dans une zone de jonction ;
- la figure 6 représente, de façon similaire à la figure 5, une variante de préparation du deuxième composant, avec un deuxième logement dans son épaisseur, en retrait de sa deuxième surface d'appui ;
- la figure 7 représente, de façon similaire à la figure 4, l'insertion de cette bague, selon une direction d'insertion, sur cette carrure, pour réaliser un assemblage prêt à passer au four ;
- la figure 8 représente, de façon similaire à la figure 7, cet assemblage après la réalisation de l'opération de brasage dans un four à atmosphère contrôlée, notamment sous argon ;
- la figure 9 représente, de façon similaire à la figure 1, cette carrure avec quatre logements au voisinage des cornes ;
- la figure 10 représente, de façon similaire à la figure 3, un premier logement en profil en pointe, oblique par rapport à la direction d'insertion, et aussi oblique par rapport aux surfaces élémentaires constituant la première surface d'appui de la carrure, après par exemple un usinage au laser ;
- la figure 11 représente, de façon similaire à la figure 9, la carrure après dépôt de la brasure dans les logements, et sur la première surface d'appui sous forme d'ondulations ;
- la figure 12 représente, de façon similaire à la figure 10, un premier logement en profil arrondi, perpendiculaire par rapport à la direction d'insertion, et aussi oblique par rapport à une des surfaces élémentaires constituant la première surface d'appui de la carrure, après par exemple un usinage mécanique en contre-dépouille ;
- la figure 13 représente, de façon similaire à la figure 10, un premier logement en profil avec un col plus étroit que le fond de ce logement.
- la figure 14 est un schéma-blocs représentant une montre comportant au moins un élément de structure et/ou d'habillage réalisé par le procédé selon l'invention.

### Description détaillée des modes de réalisation préférés

L'invention est définie par la revendication 1 annexée et concerne un procédé de brasage d'un premier composant 10 en céramique, et d'un deuxième composant 20 en alliage métallique, pour réaliser un élément 100 de structure et/ou d'habillage d'horlogerie.

Selon l'invention, on choisit, pour le premier composant 10 en céramique, une céramique à base de zircone, et on choisit, pour le deuxième composant 20 en alliage métallique, un alliage de titane.

En effet, le brasage entre des céramiques convenant à des composants d'habillage d'horlogerie, et des alliages métalliques, est une opération difficile, et les nombreux essais réalisés ont mis en évidence le caractère essentiel de comportements thermiques voisins entre la céramique et l'alliage métallique.

Le procédé est exposé ci-après peut être utilisé pour d'autres céramiques, comme des céramiques à base de nitrure de silicium, ou autres, et/ou pour d'autres alliages comme des aciers inoxydables ou d'autres alliages, mais avec des dilatations et retraits très différenciés, ce qui pénalise la qualité de l'opération de brasage, ce qui explique le choix délibéré du couple céramique à base de zircone avec un alliage de titane, pour réaliser un brasage de qualité, et surtout une excellente tenue dans le temps.

La zircone est un matériau ayant beaucoup de propriétés intéressantes, mais est totalement non réactive aux autres éléments. Par conséquent, le brasage, dont le principe est basé sur des réactions entre les éléments (brasure et pièces), est une opération très difficile à effectuer. La sélection d'un alliage métallique adéquat, compatible avec les contraintes horlogères, en termes de sécurité sanitaire, de résistance, d'inaltérabilité, de qualité d'aspect, ne va pas de soi. Comme le brasage se fait en température, il faut que les coefficients de dilatation thermique des deux éléments assemblés soient très proches l'un de l'autre, comme c'est le cas pour la zircone et le titane, pour éviter les risques de casses et de déformation des pièces.

Les alliages de titane, du moins ceux dépourvus de nickel, remplissent les conditions énoncées ci-dessus, et sont aptes à un brasage, assemblés avec une céramique à base de zircone, selon l'invention.

Avec d'autres céramiques et d'autres alliages métalliques, le problème est similaire, mais l'assemblage par brasage est dans la plupart des cas impossible, ou du moins très difficile à mettre en œuvre, même si le mode opératoire du procédé décrit ci-après est théroiquement possible pour d'autres couples céramique- alliage métallique.

Selon l'invention, on réalise au moins un premier logement 4 au cœur du premier composant 10, en retrait par rapport à une première surface d'appui 1 dans une zone de jonction 3 avec une deuxième surface d'appui 2 du deuxième composant 20, on dépose de la brasure 5 sur cette première surface d'appui 1 et dans chaque logement 4, on positionne la deuxième surface 2 en concordance avec la première surface 1 pour constituer un assemblage, et on effectue une chauffe sous atmosphère contrôlée de cet assemblage à une température supérieure à la température de fusion de la brasure 5, pour réaliser le brasage du deuxième composant 20 avec le premier composant 10 au niveau de la zone de jonction 3.

Plus particulièrement on met en œuvre ce procédé de brasage, au niveau d'au moins une zone de jonction 3, entre au moins une première surface d'appui 1 que comporte un premier composant 10 en céramique à base de zircone, et au moins une deuxième surface d'appui 2 que comporte un deuxième composant 20 en alliage de titane, pour la réalisation d'un tel élément 100. Cette deuxième surface d'appui 2 est au moins partiellement complémentaire à la première surface d'appui 1.

Selon un mode de réalisation particulier de l'invention, on agence le premier composant 10 et/ou respectivement le deuxième composant 20, en réalisant, en retrait par rapport à sa première surface d'appui 1, et/ou respectivement sa deuxième surface d'appui 2, au moins un premier logement 4 de type piquage ou saignée ou gorge, et/ou respectivement un deuxième logement 7, formant un réceptacle agencé pour permettre la pénétration d'une brasure 5 au cœur du premier composant 10, et/ou respectivement du deuxième composant 20, en retrait par rapport à la première surface d'appui 1, et/ou respectivement la deuxième surface d'appui 2, et faciliter l'accrochage mécanique de la brasure 5 dans le premier composant 10, et/ou respectivement le deuxième composant 20.

On choisit à cet effet une brasure 5 compatible au moins avec l'alliage de titane du deuxième composant, notamment et non limitativement un alliage de titane grade 5.

On prépare le premier composant 10, et/ou respectivement le deuxième composant 20, par dépose de brasure 5 sur la première surface d'appui 1 et dans chaque premier logement 4 en retrait de la première surface d'appui 1, et/ou respectivement sur la deuxième surface d'appui 2 et dans chaque deuxième logement 7 en retrait de la deuxième surface d'appui 2.

Selon l'invention, on positionne la deuxième surface 2 du deuxième composant 20 en concordance avec la première surface 1 du premier composant 10, pour constituer un assemblage. On effectue ensuite une chauffe sous atmosphère contrôlée de cet assemblage, à une température supérieure ou égale à la température de fusion de la brasure 5, pour réaliser le brasage du deuxième composant 20 avec le premier composant 10 au niveau de la zone de jonction 3.

De façon avantageuse on réalise plusieurs logements 4, répartis géométriquement dans la zone de jonction 3 pour effectuer un genre d'agrafage du deuxième composant 20 sur le premier composant 10. Par exemple, pour le brasage d'une bague autour d'une portée d'une carrure, on réalise au moins trois, ou plus particulièrement au moins quatre tels logements 4 pour assurer un bon maintien relatif des deux composants.

Dans une variante, on réalise une pluralité de premiers logements 4 discontinus, et/ou respectivement de deuxièmes logements 7, au niveau de la zone de jonction 3.

Dans une autre variante, on réalise un logement 4 continu unique au niveau de la zone de jonction 3. Plus particulièrement ce logement 4 unique suit un contour fermé autour de la première surface 1 du premier composant 10.

Dans un mode de mise en œuvre particulier, on ne réalise que des premiers logements 4 dans le premier composant 10, de façon à conserver le plus possible de matière du deuxième composant 20 dans la zone de jonction 3. On agence alors le premier composant 10 en réalisant, en retrait par rapport à sa première surface d'appui 1, au moins un premier logement 4 de type piquage ou saignée ou gorge, le premier logement 4 formant un réceptacle agencé pour permettre la pénétration d'une brasure 5 au cœur du premier composant 10, en retrait par rapport à la première surface d'appui 1, et faciliter l'accrochage mécanique de la brasure 5 dans le premier composant 10. On choisit une brasure 5 compatible au moins avec l'alliage de titane. On prépare le premier composant 10 par dépose de brasure 5 sur la première surface d'appui 1 et dans chaque premier logement 4 en retrait de la première surface d'appui 1. On positionne la deuxième surface 2 du deuxième composant 20 en concordance avec la première surface 1 du premier composant 10 ainsi préparée, pour constituer un assemblage. Et on effectue une chauffe sous atmosphère contrôlée de l'assemblage à une température supérieure ou égale à la température de fusion de la brasure 5, pour réaliser le brasage du deuxième composant 20 avec le premier composant 10 au niveau de la zone de jonction 3.

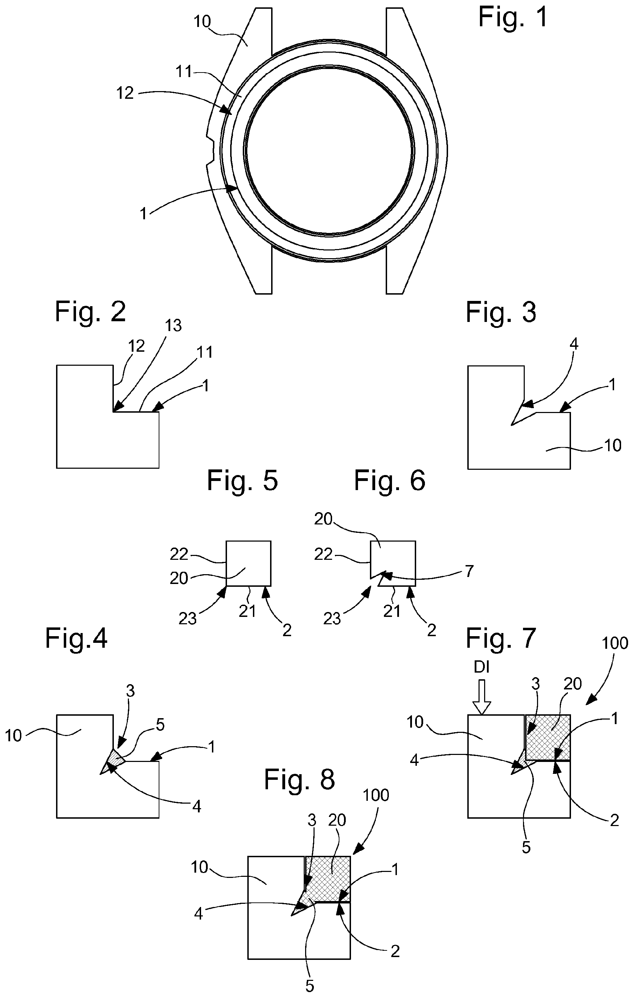

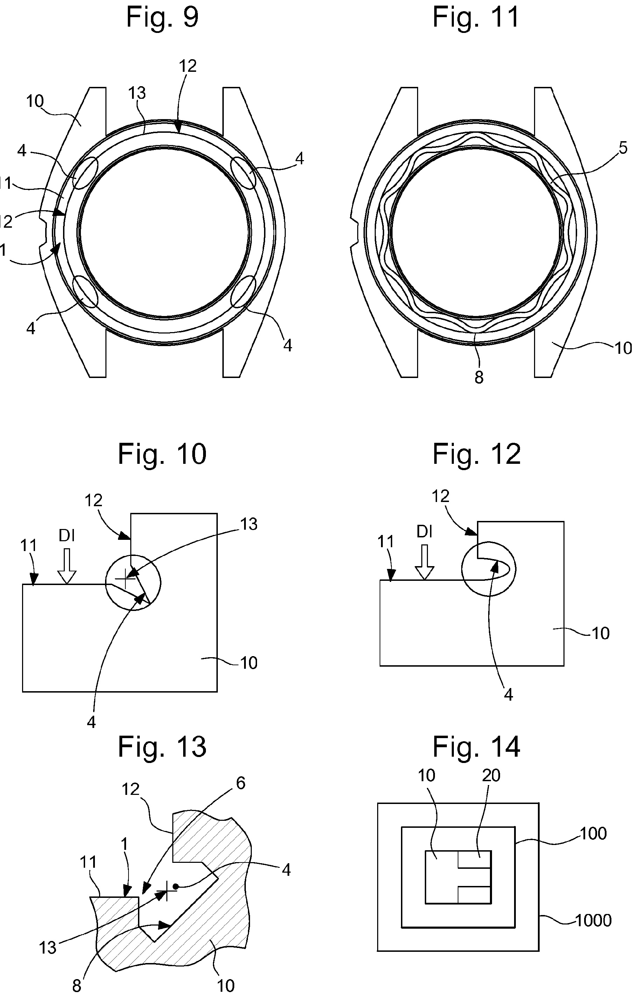

Selon l'invention, on réalise au moins une première surface d'appui 1 du premier composant 10 avec au moins deux premières surfaces élémentaires 11, 12, qui sont sécantes au niveau d'au moins une première ligne d'intersection 13, et on réalise au moins un premier logement 4 sur une première ligne d'intersection 13. Par exemple, tel que visible sur les figures 8 et 9, une première surface élémentaire 11 est une surface plane, une deuxième surface élémentaire 12 est cylindrique, et la ligne d'intersection 13 est un cercle, et les logements 4 empiètent à la fois sur la première surface élémentaire 11, la deuxième surface élémentaire 12, et la ligne d'intersection 13.

Selon l'invention, on réalise au moins une deuxième surface d'appui 2 que comporte un deuxième composant 20 avec au moins deux surfaces élémentaires 21, 22, sécantes au niveau d'au moins une deuxième ligne d'intersection 23 située dans la zone de jonction 3, tel que visible sur la figure 5.

Dans l'alternative où on aménage également le deuxième composant 20 avec un ou des deuxièmes logements 7, on réalise plus particulièrement au moins un tel deuxième logement 7 sur une deuxième ligne d'intersection 23.

Plus particulièrement, on choisit la brasure 5 compatible à la fois avec l'alliage de titane et la céramique à base de zircone, quand c'est possible.

Plus particulièrement, on effectue un nettoyage par ultra-sons du premier composant 10 et du deuxième composant 20 avant l'opération de brasage.

Plus particulièrement, on effectue un maintien mécanique de l'assemblage en serrage d'appui au niveau de la zone de jonction 3 pendant l'opération de brasage.

Plus particulièrement, on choisit la brasure 5 sous forme de pâte à braser, qu'on insère sous pression au moins dans chaque premier logement 4, et/ou respectivement dans chaque deuxième logement 7 s'il en existe, en retrait de la première surface 1, et/ou respectivement de la deuxième surface 2.

Plus particulièrement, tel que visible sur la figure 13, on réalise au moins un premier logement 4 avec un col 6 au voisinage de la première surface 1, dont la section du col 6 est plus faible que la section du fond 8 du premier logement 4 à l'opposé de la première surface 1, pour former une clavette de maintien mécanique du deuxième composant 20 avec le premier composant 10 après l'opération de brasage. Plus particulièrement, on réalise chaque premier logement 4 avec un tel col 6 au voisinage de la première surface 1, dont la section du col 6 est plus faible que la section du fond 8 du premier logement 4 à l'opposé de la première surface 1, pour former une clavette de maintien mécanique du deuxième composant 20 avec le premier composant 10 après l'opération de brasage.

Dans une variante, on détermine une direction unique d'insertion DI du deuxième composant 20 pour sa mise en concordance avec le premier composant 10, et on réalise au moins un premier logement 4 oblique ou perpendiculaire par rapport à la direction d'insertion DI. Plus particulièrement encore, on réalise chaque premier logement 4 oblique ou perpendiculaire par rapport à la direction d'insertion DI.

Dans une autre variante, on détermine une direction unique d'insertion DI du deuxième composant 20 pour sa mise en concordance avec le premier composant 10 et on réalise au moins un premier logement 4 selon la direction d'insertion DI.

Plus particulièrement, on détermine une direction unique d'insertion DI du deuxième composant 20 pour sa mise en concordance avec le premier composant 10, et on réalise la première surface 1 et la deuxième surface 2 avec un jeu radial JR entre elles, à l'état libre avant dépôt de brasure 5, lequel jeu radial JR est compris entre 0.010 mm et 0.040 mm au rayon, perpendiculairement à la direction d'insertion DI. Plus particulièrement encore, on réalise la première surface 1 et la deuxième surface 2 avec un jeu radial JR entre elles, à l'état libre avant dépôt de brasure 5, lequel jeu radial JR est compris entre 0.015 mm et 0.025 mm au rayon, perpendiculairement à la direction d'insertion DI.

Plus particulièrement, on insère la brasure 5 dans chaque premier logement 4 au moyen d'une seringue.

Plus particulièrement, on choisit comme brasure 5 une brasure qui est adaptée au brasage du carbure de tungstène sur l'acier.

Plus particulièrement, on choisit la brasure 5 comportant du cuivre, du manganèse, et du nickel, et dépourvue de cadmium, à granulométrie extra-fine, et comportant un liant pour brasage au four à atmosphère contrôlée pour température comprise entre 1000°C et 1100°C.

Plus particulièrement, on effectue la chauffe sous atmosphère contrôlée pour l'opération de brasage dans un four à atmosphère contrôlée sous argon et comportant un tapis avec une vitesse de passage dans le four qui est comprise entre 0.15 m/mn et 0.25 m/mn.

Plus particulièrement, on effectue, après l'opération de brasage, un premier refroidissement sur un tapis avec une vitesse d'avance comprise entre 0.05 m/mn et 0.15 m/mn.

Plus particulièrement, on effectue le brasage et/ou le premier refroidissement avec un outillage massif effectuant un maintien mécanique de l'assemblage, et/ou avec une masse au moins égale à celle de l'assemblage maintenue posée sur l'assemblage, pour ralentir le refroidissement de l'assemblage après l'opération de brasage.

Plus particulièrement, on dépose, après le brasage, l'assemblage sur une masse en graphite pour effectuer un refroidissement rapide sans choc thermique.

Plus particulièrement, après le brasage et/ou le premier refroidissement, on dépose l'assemblage sur une masse en graphite pour effectuer un refroidissement rapide sans choc thermique.

Plus particulièrement, on applique la brasure 5 sur la première surface 1, et/ou respectivement sur la deuxième surface 2, en forme d'ondulations 8, tel que visible sur la figure 10.

Plus particulièrement, on réalise au moins un premier logement 4 pendant la fabrication du premier composant 10 en céramique, en particulier ce premier logement 5 est conçu au niveau du moule.

Plus particulièrement, on usine complètement, ou on effectue un usinage de finition d'au moins un premier logement 4 à l'aide d'un laser.

Plus particulièrement, on usine complètement ou on effectue un usinage de finition au moins un premier logement 4 mécaniquement à l'outil ou à la meule.

Plus particulièrement, on choisit la céramique à base de zircone comportant :
- au moins un stabilisant choisi parmi l'ensemble des oxydes comprenant l'oxyde d'yttrium, l'oxyde de magnésium et l'oxyde de calcium seuls ou en combinaison ;
- au moins un élément destiné à réaliser une phase vitreuse, et choisi parmi l'ensemble comprenant de l'oxyde de silicium, de l'oxyde d'aluminium, de l'oxyde de lithium et de l'oxyde d'yttrium seuls ou en combinaison ;
- une poudre d'oxyde servant de pigment ;
- et une poudre de zircone formant le complément à 100% en masse.

Plus particulièrement, on choisit la céramique à base de zircone constituée de :
- 3 à 20 % en masse d'au moins un stabilisant choisi parmi l'ensemble des oxydes comprenant l'oxyde d'yttrium, l'oxyde de magnésium et l'oxyde de calcium seuls ou en combinaison ;
- 0,1 à 5 % en masse d'au moins un élément destiné à réaliser une phase vitreuse, et choisi parmi l'ensemble comprenant de l'oxyde de silicium, de l'oxyde d'aluminium, de l'oxyde de lithium et de l'oxyde d'yttrium seuls ou en combinaison ;
- 1 à 10% en masse d'une poudre d'oxyde servant de pigment ;
- et une poudre de zircone formant le complément à 100% en masse.

L'invention est plus particulièrement illustrée avec l'assemblage par brasage de bagues en alliage de titane, en particulier du titane grade 5, sur des carrures de montre en céramique à base de zircone. Les campagnes d'essais montrent qu'un paramètre important est le jeu, avant brasage, entre la carrure et la bague, qui est nécessaire pour permettre une dilatation thermique correcte, sans déformation parasite. En particulier, pour une carrure avec une portée d'assemblage de 37 mm environ, le jeu est avantageusement compris entre 0,01 et 0,04 mm, et de préférence proche de 0,02 mm au rayon, entre la carrure et la bague. Naturellement cette faible valeur de jeu nécessite des tolérances d'usinage réduites, synonymes de coût.

La fabrication de logements en contre-dépouille avec possible avec un laser. Ces logements 4 en contre-dépouilles ont pour objectif de créer des zones d'accrochage mécaniques, qui viennent en renfort du brasage. Les logements 4 en contre-dépouille peuvent être localisés dans certaines zones seulement, par exemple au voisinage des cornes de la carrure tel que visible sur la figure 8.

La mise en œuvre du brasage s'effectue correctement avec une brasure CF CuMn3, et avec un four sous atmosphère contrôlée d'argon.

De bonnes conditions de brasage sont les suivantes :
- vitesse de passage dans le four: 20 cm / min (vitesse de consigne) ;
- vitesse de refroidissement : 10 cm / min (vitesse de consigne) ;
- brasage sous Argon ;
- température du four : 1050 °C en température de consigne.

Le protocole opératoire comprend toutes les étapes effectuées pour obtenir le produit final.

La brasure est appliquée sur la carrure 10 sur la base de l'emplacement de la bague 20, ainsi que sur les parois, et dans les logements 4 réalisés au préalable. De plus, elle est avantageusement appliquée en suivant la forme d'ondulations 8, tel que visible sur la figure 10.

La bague 20 est ensuite positionnée sur la brasure.

Lors du passage au four, pour éviter que la bague 20 ne bouge lors de la dilatation thermique, il est avantageux d'appliquer une masse sur la bague, par exemple une masse équivalente à celle de la carrure 10. Cette masse permet aussi de stabiliser l'ensemble lors de l'avancée de la bande du four bouge. Et surtout, la présence de cette masse autorise un refroidissement plus lent des composants, et surtout de la bague en titane. Ceci permet de moins contraindre l'assemblage en limitant les effets des coefficients de dilatation thermique. On constate, encore, que l'application d'une telle masse sur la bague en titane grade 5 lors du refroidissement permet une certaine protection de la bague contre l'oxydation.

A la sortie du four, les composants brasés ensemble sont avantageusement déposés sur un socle en graphite pour éviter un choc thermique, et une masse supplémentaire, là encore de l'ordre de grandeur de la masse de la carrure, est appliquée pour bien maintenir la bague dans le fond de la carrure lors de ce refroidissement plus rapide.

La présence de tels logements avec contre-dépouille est essentielle pour garantir la tenue de l'assemblage, car, sinon, la brasure adhère au titane mais n'adhère pas correctement à la céramique. Sans le rôle d'ancrage joués par la masse de brasure 5 dans les logements 4, la bague remonterait lors du refroidissement des composants, en raison de la différence de la vitesse de refroidissement différente des deux matériaux. Cela confirme qu'il faut maintenir un refroidissement suffisamment lent pour réduire au maximum les contraintes imposées par la dilatation thermique. On note aussi que la bague tend à remonter aussi à cause de la brasure qui forme une couche mince d'interface entre le titane et la céramique à base zircone.

Grâce aux logements 4 avec contre dépouilles, les contre-dépouilles servent d'ancrage mécanique à la bague, car la brasure permet la création d'un support métallique qui retient les deux composants ensemble.

Le brasage de bagues en titane grade 5 sur des carrures en céramique est donc possible, et donne des bons résultats lors des essais en résistance au déchassage.

L'amélioration du procédé passe aussi par une optimisation du dimensionnement des composants, et en particulier une réduction de section des bagues en titane, avec une section de l'ordre de 0.75 à 1.00 mm.

L'invention concerne encore une montre 1000 comportant au moins un élément 100 de structure et/ou d'habillage réalisé par le procédé selon l'invention.

En somme, l'invention permet un assemblage durable et de qualité entre des composants en titane grade 5 et des composants en céramique à base de zircone, avec un procédé de brasage sous atmosphère contrôlée. Elle se distingue des autres techniques par l'ajout de matière sous forme de pâte à braser dans l'étape d'assemblage. De plus, l'invention assure de meilleures propriétés mécaniques et thermiques à l'assemblage par rapport aux technologies usuelles.

Comme, dans le procédé, la pâte à braser fusionne avec le titane grade 5, ce qui permet de former une extension métallique du composant en titane, mais elle ne réagit pas avec la céramique. Ainsi toutes les propriétés de résistance mécanique et thermique sont définies par la brasure, et par la qualité de son ancrage dans les logements réalisés dans le composant en céramique.

## Revendications

1. Procédé de brasage d'un premier composant (10) en céramique, et d'un deuxième composant (20) en alliage métallique, pour réaliser un élément (100) de structure et/ou d'habillage d'horlogerie, dans lequel on choisit, pour ledit premier composant (10) une céramique à base de zircone, et on choisit, pour ledit deuxième composant (20), un alliage de titane, et on réalise au moins un premier logement (4) en contre-dépouille au cœur du premier composant (10), en retrait par rapport à une première surface d'appui (1) dans une zone de jonction (3) avec une deuxième surface d'appui (2) du deuxième composant (20), on dépose de la brasure (5) sur cette première surface d'appui (1) et dans chaque logement (4), on positionne la deuxième surface (2) en concordance avec la première surface (1) pour constituer un assemblage, et on effectue une chauffe sous atmosphère contrôlée dudit assemblage à une température supérieure à la température de fusion de la brasure (5), pour réaliser le brasage dudit deuxième composant (20) avec ledit premier composant (10) au niveau de la zone de jonction (3), et encore on réalise au moins une dite deuxième surface d'appui (2) que comporte un deuxième composant (20) avec au moins deux surfaces élémentaires (21, 22) sécantes au niveau d'au moins une deuxième ligne d'intersection (23) située dans ladite zone de jonction (3), et on réalise ladite première surface d'appui (1) avec au moins deux première surfaces élémentaires (11, 12) sécantes au niveau d'au moins une première ligne d'intersection (13), sur laquelle ledit au moins un logement (4) est réalisé.

2. Procédé de brasage selon la revendication 1, **caractérisé en ce que** ladite moins une deuxième surface d'appui (2) est au moins partiellement complémentaire à ladite première surface d'appui (1), et **en ce qu'**on agence ledit deuxième composant (20), en réalisant un deuxième logement (7), formant un réceptacle agencé pour permettre la pénétration d'une brasure (5) au cœur dudit deuxième composant (20), en retrait par rapport à ladite deuxième surface d'appui (2), et faciliter l'accrochage mécanique de ladite brasure (5) dans ledit deuxième composant (20), **en ce qu'**on choisit une dite brasure (5) compatible au moins avec ledit alliage de titane, **en ce qu'**on prépare ledit deuxième composant (20), par depôt de brasure (5) sur ladite deuxième surface d'appui (2) et dans chaque dit deuxième logement (7).

3. Procédé selon la revendication 2, **caractérisé en ce qu'**on réalise au moins un dit deuxième logement (7) sur une dite deuxième ligne d'intersection (23).

4. Procédé selon l'une des revendications 1 à 3, **caractérisé en ce qu'**on effectue un maintien mécanique dudit assemblage en serrage d'appui au niveau de ladite zone de jonction (3) pendant ladite opération de brasage.

5. Procédé selon l'une des revendications 1 à 4, **caractérisé en ce qu'**on choisit ladite brasure (5) sous forme de pâte à braser, qu'on insère sous pression au moins dans chaque dit premier logement (4), en retrait de ladite première surface (1).

6. Procédé selon l'une des revendications 1 à 5, **caractérisé en ce qu'**on réalise au moins un dit premier logement (4) avec un col (6) au voisinage de ladite première surface (1), dont la section dudit col (6) est plus faible que la section du fond (8) dudit premier logement (4) à l'opposé de ladite première surface (1), pour former une clavette de maintien mécanique dudit deuxième composant (20) avec ledit premier composant (10) après ladite opération de brasage.

7. Procédé selon l'une des revendications 1 à 6, **caractérisé en ce qu'**on détermine une direction unique d'insertion (DI) dudit deuxième composant (20) pour sa mise en concordance avec ledit premier composant (10) et **en ce qu'**on réalise au moins un dit premier logement (4) oblique ou perpendiculaire par rapport à ladite direction d'insertion (DI).

8. Procédé selon l'une des revendications 1 à 7, **caractérisé en ce qu'**on détermine une direction unique d'insertion (DI) dudit deuxième composant (20) pour sa mise en concordance avec ledit premier composant (10) et **en ce qu'**on réalise ladite première surface (1) et ladite deuxième surface (2) avec un jeu radial (JR) entre elles, à l'état libre avant dépôt de brasure (5), lequel jeu radial (JR) est compris entre 0.010 mm et 0.040 mm au rayon, perpendiculairement à ladite direction d'insertion (DI).

9. Procédé selon la revendication 8, **caractérisé en ce que** le jeu radial (JR) est compris entre 0.015 mm et 0.025 mm au rayon.

10. Procédé selon l'une des revendications 1 à 9, **caractérisé en ce qu'**on choisit comme dite brasure (5) une brasure qui est adaptée au brasage du carbure de tungstène sur l'acier.

11. Procédé selon l'une des revendications 1 à 10, **caractérisé en ce qu'**on choisit ladite brasure (5) comportant du cuivre, du manganèse, et du nickel, et dépourvue de cadmium, à granulométrie extra-fine, et comportant un liant pour brasage au four à atmosphère contrôlée pour température comprise entre 1000°C et 1100°C.

12. Procédé selon l'une des revendications 1 à 11, **caractérisé en ce qu'**on réalise au moins un dit premier logement (4) pendant la fabrication dudit premier composant (10) en céramique.

13. Procédé selon l'une des revendications 1 à 12, **caractérisé en ce qu'**on usine complètement ou **en ce qu'**on effectue un usinage de finition d'au moins un dit premier logement (4) à l'aide d'un laser.

14. Procédé selon l'une des revendications 1 à 13, **caractérisé en ce qu'**on usine complètement ou **en ce qu'**on effectue un usinage de finition d'au moins un dit premier logement (4) mécaniquement à l'outil ou à la meule.

15. Procédé selon l'une des revendications 1 à 14, **caractérisé en ce qu'**on réalise une pluralité de premiers logements (4) discontinus au niveau de ladite zone de jonction (3).

16. Procédé selon l'une des revendications 1 à 15, **caractérisé en ce qu'**on choisit ladite céramique à base de zircone comportant :
- au moins un stabilisant choisi parmi l'ensemble des oxydes comprenant l'oxyde d'yttrium, l'oxyde de magnésium et l'oxyde de calcium seuls ou en combinaison ;
- au moins un élément destiné à réaliser une phase vitreuse, et choisi parmi l'ensemble comprenant de l'oxyde de silicium, de l'oxyde d'aluminium, de l'oxyde de lithium et de l'oxyde d'yttrium seuls ou en combinaison ;
- une poudre d'oxyde servant de pigment ;
- et une poudre de zircone formant le complément à 100% en masse.

17. Procédé selon la revendication 16, **caractérisé en ce qu'**on choisit ladite céramique à base de zircone constituée de :
- 3 à 20 % en masse d'au moins un stabilisant choisi parmi l'ensemble des oxydes comprenant l'oxyde d'yttrium, l'oxyde de magnésium et l'oxyde de calcium seuls ou en combinaison ;
- 0,1 à 5 % en masse d'au moins un élément destiné à réaliser une phase vitreuse, et choisi parmi l'ensemble comprenant de l'oxyde de silicium, de l'oxyde d'aluminium, de l'oxyde de lithium et de l'oxyde d'yttrium seuls ou en combinaison ;
- 1 à 10% en masse d'une poudre d'oxyde servant de pigment ;
- et une poudre de zircone formant le complément à 100% en masse.

18. Montre comportant au moins un élément de structure et/ou d'habillage réalisé par le procédé selon l'une des revendications 1 à 17.

## Patentansprüche

1. Ein Verfahren zum Hartlöten einer ersten keramischen Komponente (10) und einer zweiten Metalllegierungs-Komponente (20), zur Herstellung eines strukturellen bzw. äußeren Uhrenteils (100), bei dem für die besagte erste Komponente (10) eine Keramik auf Zirkonia-Basis gewählt wird, und eine Titanlegierung für diese besagte zweite Komponente (20), wobei mindestens eine erste Hinterschneidung (4) innerhalb des ersten Komponente (10) gebildet wird, von einer ersten Lagerfläche (1) in einer Verbindungszone (3) mit einer zweiten Lagerfläche (2) der zweiten Komponente (20) zurückgesetzt wird, auf dieser ersten Lagerfläche (1) wird die Lötstelle (5) abgeschieden und innerhalb jeder Ausnehmung (4) wird die zweite Oberfläche (2) zur Bildung einer Komponentengruppe in einer Ausrichtung mit der ersten Oberfläche (1) angeordnet, und diese besagte Komponentengruppe wird in einer kontrollierten Atmosphäre bei einer höheren Temperatur als der Schmelztemperatur des Lötlots (5) zur Bildung der Lötverbindung der zweiten besagten Komponente (20) mit dem ersten Komponente (10) in der Verbindungszone (3) erhitzt, wobei eine weitere mindestens eine zweite Lagerfläche (2) gebildet wird, die ein zweites Bauelement (20) mit mindestens zwei Elementarflächen (21, 22) aufweist, sich auf mindestens einer in der besagten Verbindungszone (3) befindlichen Schnittlinie (23) schneidet und die besagte erste Lagerfläche (1) mit mindestens zwei ersten Elementarflächen (11, 12) versehen wird, die sich auf mindestens einer Schnittlinie (13) schneiden, auf der die besagte zumindest eine Ausnehmung (4) gebildet wird.

2. Hartlötverfahren nach Anspruch 1, **dadurch gekennzeichnet, dass** die besagte mindestens eine zweite Auflagefläche (2) mindestens teilweise komplementär zu der besagten ersten Auflagefläche (1) ist, und dass die besagte zweite Komponente (20) durch Herstellung einer zweiten Ausnehmung (7), die eine Aufnahme bildet, die so angeordnet ist, dass das Hartlot (5) in das Innere der besagten zweiten Komponente (20) eindringen kann, von der besagten zweiten Auflagefläche (2) zurückgesetzt angeordnet ist, und dass die mechanische Haftung des Hartlots (5) im Inneren der besagten zweiten Komponente (20) erleichtert wird, und dass ein Hartlot (5) gewählt wird, das zumindest mit der besagten Titanlegierung verträglich ist, und dass die besagte zweite Komponente (20) durch Auftragen von Hartlot (5) auf die besagte zweite Lagerfläche (2) und im Inneren jeder besagten zweiten Ausnehmung (7) hergestellt wird.

3. Verfahren nach Anspruch 2, **dadurch gekennzeichnet, dass** mindestens eine besagte zweite Ausnehmung (7) auf einer besagten zweiten Schnittlinie (23) hergestellt wird.

4. Verfahren nach einem der Ansprüche 1 bis 3, **dadurch gekennzeichnet, dass** die besagte Komponentengruppe während des Lötvorgangs mechanisch fest in der Verbindungszone (3) gepresst gehalten wird.

5. Verfahren nach einem der Ansprüche 1 bis 4, **dadurch gekennzeichnet, dass** das besagte Hartlot (5) in Form einer Hartlotpaste gewählt wird, die unter Druck mindestens in jede der besagten ersten Ausnehmungen (4), die von der besagten ersten Oberfläche (1) zurückgesetzt sind, eingebracht wird.

6. Verfahren nach einem der Ansprüche 1 bis 5, **dadurch gekennzeichnet, dass** mindestens eine der besagten ersten Ausnehmungen (4) mit einem Ansatz (6) in der Nähe der besagten ersten Oberfläche (1) hergestellt wird, wobei der Querschnitt des besagten Ansatzes (6) kleiner ist als der Querschnitt der Rückseite (8) der besagten ersten Aussparung (4), die der besagten ersten Oberfläche (1) zugewandt ist, um einen Schlüssel zu bilden, der die besagte zweite Komponente (20) nach dem besagten Lötvorgang mechanisch an der besagten ersten Komponente (10) hält.

7. Verfahren nach einem der Ansprüche 1 bis 6, **dadurch gekennzeichnet, dass** eine einzige Einschubrichtung (DI) der besagten zweiten Komponente (20) für seine Ausrichtung mit der besagten ersten Komponente (10) bestimmt wird, und dass mindestens eine der besagten ersten Ausnehmungen (4) schräg oder senkrecht zu der besagten Einschubrichtung (DI) ausgeführt wird.

8. Verfahren nach einem der Ansprüche 1 bis 7, **dadurch gekennzeichnet, dass** eine einzelne Einführrichtung (DI) der besagten zweiten Komponente (20) für ihre Ausrichtung mit der besagten ersten Komponente (10) bestimmt ist, und dadurch, dass die besagte erste Oberfläche (1) und die besagte zweite Oberfläche (2) mit einem radialen Spiel (JR) zwischen ihnen hergestellt sind, im freien Zustand vor der Abscheidung von Hartlot (5), das besagte radiale Spiel (JR) zwischen 0,010 mm und 0,040 mm am Radius umfasst, Senkrecht zu dieser besagten Einschubrichtung (DI).

9. Verfahren nach Anspruch 8, **dadurch gekennzeichnet, dass** das radiale Spiel (JR) zwischen 0,015 mm und 0,025 mm am Radius liegt.

10. Verfahren nach einem der Ansprüche 1 bis 9, **dadurch gekennzeichnet, dass** das besagte gewählte Hartlot (5) ein Hartlot ist, das zum Hartlöten von Wolframkarbid auf Stahl geeignet ist.

11. Verfahren nach einem der Ansprüche 1 bis 10, **dadurch gekennzeichnet, dass** das besagte Hartlot (5) ausgewählt wird, das Kupfer, Mangan und Nickel umfasst und kadmiumfrei ist, mit extrafeiner Korngröße, und ein Bindemittel zum Hartlöten in einem Ofen mit kontrollierter Atmosphäre bei einer Temperatur zwischen 1.000°C und 1.100°C umfasst.

12. Verfahren nach einem der Ansprüche 1 bis 11, **dadurch gekennzeichnet, dass** mindestens eine der besagten ersten Ausnehmungen (4) während der Herstellung der besagten ersten keramischen Komponente (10) hergestellt wird.

13. Verfahren nach einem der Ansprüche 1 bis 12, **dadurch gekennzeichnet, dass** mindestens eine der besagten ersten Ausnehmungen (4) mit einem Laser vollständig bearbeitet oder fertig bearbeitet wird.

14. Verfahren nach einem der Ansprüche 1 bis 13, **dadurch gekennzeichnet, dass** mindestens eine der besagten ersten Ausnehmungen (4) vollständig mechanisch mit einem Werkzeug oder einer Schleifscheibe bearbeitet oder nachbearbeitet wird.

15. Verfahren nach einem der Ansprüche 1 bis 14, **dadurch gekennzeichnet, dass** in der besagten Verbindungszone (3) eine Vielzahl von diskontinuierlichen ersten Ausnehmungen (4) hergestellt wird.

16. Verfahren nach einem der Ansprüche 1 bis 15, **dadurch gekennzeichnet, dass** die besagte Keramik auf Zirkoniumdioxidbasis so gewählt wird, dass diese Folgendes aufweist:
- mindestens einen Stabilisator, der aus der Gruppe der Oxide ausgewählt wird, die Yttriumoxid, Magnesiumoxid und Calciumoxid umfasst, entweder allein oder in Kombination;
- mindestens ein Element zur Bildung einer glasartigen Phase, das aus der Gruppe ausgewählt ist, die Siliziumoxid, Aluminiumoxid, Lithiumoxid und Yttriumoxid umfasst, entweder allein oder in Kombination;
- ein als Pigment verwendetes Oxidpulver;
- und als verbleibender Rest ein Zirkonoxidpulver bis zu 100 Gew.-%.

17. Verfahren nach Anspruch 16, **dadurch gekennzeichnet, dass** die besagte Keramik auf Zirkoniumoxidbasis ausgewählt wird, um Folgendes zu umfassen:
- mindestens 3 bis 20 Gew.-% eines Stabilisators, ausgewählt aus der Gruppe der Oxide, umfassend Yttriumoxid, Magnesiumoxid und Calciumoxid, entweder allein oder in Kombination;
- mindestens 0,1 bis 5 Gew.-% eines Elements zur Erzeugung einer glasartigen Phase, ausgewählt aus der Gruppe umfassend Siliciumoxid, Aluminiumoxid, Lithiumoxid und Yttriumoxid, entweder allein oder in Kombination;
- 1 bis 10 Gew.-% eines als Pigment verwendeten Oxidpulvers;
- und als verbleibender Rest ein Zirkonoxidpulver bis zu 100 Gew.-%.

18. Eine Uhr, die mindestens ein strukturelles bzw. äußeres Teil umfasst, das durch das Verfahren nach einem der Ansprüche 1 bis 17 hergestellt ist.

## Claims

1. A method for brazing a first ceramic component (10) and a second metal alloy component (20), to make a structural and/or external horology part (100), in which a zirconia-based ceramic is chosen for said first component (10), and a titanium alloy is chosen for said second component (20), and at least one first undercut recess (4) is made inside the first component (10), set back from a first bearing surface (1) in a junction zone (3) with a second bearing surface (2) of the second component (20), brazing solder (5) is deposited on this first bearing surface (1) and inside each recess (4), the second surface (2) is positioned in alignment with the first surface (1) to form an assembly, and said assembly is heated in a controlled atmosphere at a higher temperature than the melting temperature of the brazing solder (5) to form the brazing joint of said second component (20) with said first component (10) in the junction zone (3), and another at least one said second bearing surface (2) is made comprising a second component (20) with at least two elementary surfaces (21, 22), intersecting on at least one intersecting line (23) located in said junction zone (3), and said first bearing surface (1) is made with at least two first elementary surfaces (11, 12) intersecting on at least one intersecting line (13), on which said at least one recess (4) is made.

2. The brazing method according to claim 1, **characterised in that** said at least one second bearing surface (2) is at least partially complementary to said first bearing surface (1), and **in that** said second component (20) is arranged, by making a second recess (7) forming a receptacle arranged to allow brazing solder (5) to penetrate inside said second component (20), set back from said second bearing surface (2), and to facilitate the mechanical adhesion of said brazing solder (5) inside said second component (20), **in that** a said brazing solder (5) compatible at least with said titanium alloy is chosen, **in that** said second component (20) is prepared by depositing brazing solder (5) on said second bearing surface (2) and inside each said second recess (7).

3. The method according to claim 2, **characterised in that** at least one said second recess (7) is made on a said second intersecting line (23).

4. The method according to any of claims 1 to 3, **characterised in that** said assembly is mechanically kept tightly pressed in the said junction zone (3) during said brazing operation.

5. The method according to any of claims 1 to 4, **characterised in that** said brazing solder (5) is chosen in the form of a brazing paste, which is inserted under pressure at least in each said first recess (4), set back from said first surface (1).

6. The method according to any of claims 1 to 5, **characterised in that** at least one said first recess (4) is made with a neck (6) in proximity to said first surface (1), in which the cross-section of said neck (6) is smaller than the cross-section of the back (8) of said first recess (4) facing said first surface (1), to form a key mechanically holding said second component (20) to said first component (10) after said brazing operation.

7. The method according to any of claims 1 to 6, **characterised in that** a single direction of insertion (DI) of said second component (20) is determined for its alignment with said first component (10), and **in that** at least one said first recess (4) is made oblique or perpendicular to said direction of insertion (DI).

8. The method according to any of claims 1 to 7, **characterised in that** a single direction of insertion (DI) of said second component (20) is determined for its alignment with said first component (10), and **in that** said first surface (1) and said second surface (2) are made with a radial clearance (JR) between them, in the free state before the deposition of brazing solder (5), said radial clearance (JR) is comprised between 0.010 mm and 0.040 mm at the radius, perpendicularly to said direction of insertion (DI).

9. The method according to claim 8, **characterised in that** the radial clearance (JR) is comprised between 0.015 mm and 0.025 mm at the radius.

10. The method according to any of claims 1 to 9, **characterised in that** said chosen brazing solder (5) is a brazing solder that is suitable for brazing tungsten carbide on steel.

11. The method according to any of claims 1 to 10, **characterised in that** said brazing solder (5) is chosen comprising copper, manganese and nickel, and cadmium free, with extra-fine grain size, and comprising a binder for brazing in a controlled atmosphere furnace at a temperature comprised between 1,000°C and 1,100°C.

12. The method according to any of claims 1 to 11, **characterised in that** at least one said first recess (4) is made during the fabrication of said first ceramic component (10).

13. The method according to any of claims 1 to 12, **characterised in that** at least one said first recess (4) is completely machined or finish-machined using a laser.

14. The method according to any of claims 1 to 13, **characterised in that** at least one said first recess (4) is completely machined or finish-machined mechanically using a tool or grinding wheel.

15. The method according to any of claims 1 to 14, **characterised in that** a plurality of discontinuous first recesses (4) is made in said junction zone (3).

16. The method according to any of claims 1 to 15, **characterised in that** said zirconia-based ceramic is chosen to comprise:
- at least one stabiliser chosen from the group of oxides comprising yttrium oxide, magnesium oxide, and calcium oxide, alone or in combination;
- at least one element for creating a vitreous phase and chosen from the group comprising silicon oxide, aluminium oxide, lithium oxide and yttrium oxide, alone or in combination;
- an oxide powder used as pigment;
- and the remainder a zirconia powder up to 100% by weight.

17. The method according to claim 16, **characterised in that** said zirconia-based ceramic is chosen to comprise:
- 3 to 20% by weight of at least one stabiliser chosen from the group of oxides comprising yttrium oxide, magnesium oxide and calcium oxide, alone or in combination;
- 0.1 to 5% by weight of at least one element for creating a vitreous phase, and chosen from the group comprising silicon oxide, aluminium oxide, lithium oxide and yttrium oxide, alone or in combination;
- 1 to 10% by weight of an oxide powder used as pigment;
- and the remainder a zirconia powder up to 100% by weight.

18. A watch comprising at least one structural and/or external part made by the method according to any of claims 1 to 17.
